# FASCICULE DE BREVET EUROPEEN

(11) **EP 2 471 237 B1**
(45) Date de publication et mention de la délivrance du brevet: **05.06.2013**
(21) Numéro de dépôt: 10742144.8
(22) Date de dépôt: 11.08.2010
(51) Int. Cl.: H04L 29/06, H04W 12/06

(54) **DISPOSITIF ÉLECTRONIQUE NOMADE CONFIGURÉ POUR ÉTABLIR UNE COMMUNICATION SANS FIL SÉCURISÉ**
MOBILE ELEKTRONISCHE VORRICHTUNG MIT KONFIGURATION ZUR HERSTELLUNG EINER SICHEREN DRAHTLOSEN KOMMUNIKATION
MOBILE ELECTRONIC DEVICE CONFIGURED TO ESTABLISH SECURE WIRELESS COMMUNICATION

(30) Priorité: 26.08.2009 EP 09305789
(43) Date de publication de la demande: 04.07.2012
(73) Titulaire: Gemalto SA, 92190 Meudon (FR)
(72) Inventeur: GUICHARD, Olivier, F-13001 Marseille (FR)
(86) Numéro de dépôt international: PCT/EP2010/061704
(87) Numéro de publication internationale: WO 2011/023554

(56) Documents cités:
- US-A1- 2007 073 937
- US-A1- 2009 088 133

## Description

L'invention concerne des dispositifs électroniques communiquant avec le monde extérieur principalement à l'aide de protocoles de communication sans contact. Plus précisément, l'invention concerne des baladeurs vidéo, des tablettes internet multimédia ou plus généralement tous dispositifs électroniques nomades qui accèdent à un contenu multimédia délivré depuis un serveur de contenus distant.

De nouveaux modèles économiques se développent comme par exemple le modèle dit « pay per view ». Selon un tel modèle, un client peut télécharger et/ou visionner un contenu multimédia contre un paiement. Afin de prévenir tout accès non autorisé au dit contenu, le visionnage et/ou le chargement d'un contenu multimédia requiert dès lors une protection de la communication entre un dispositif de visionnage et un serveur de contenus ou une protection directe du contenu. On parle alors de contenu multimédia protégé.

Pour répondre à cette exigence de protection, certains dispositifs nomades disposent de moyens intégrés pour mettre en oeuvre un protocole de communication sécurisé sous la forme d'une authentification unilatérale ou mutuelle vis-à-vis de serveurs de contenus. Le document US2007/00773973 décrit une dispositif nomade, du type caméra photo/vidéo, pour restituer à un utilisateur un contenu multimédia. Le dispositif peut recevoir et gérer une mémoire de stockage, ayant une interface pout échanger des données multimédia, qui peut communiquer avec un point d'accès à un réseau de communication sans fil. La carte peut aussi communiquer avec un serveur d'authentification, générer des secrets, et réaliser des calculs cryptographiques.

En variante, des contenus sont préalablement chiffrés et leur chargement et/ou leur visionnage exige(nt) un déchiffrement. On entend par visionnage d'un contenu protégé, le rendu sonore et/ou visuel dudit contenu, ainsi qu'une éventuelle fonction de déchiffrement pouvant être réalisée « à la volée ». Cette fonction de déchiffrement peut être un préalable au dit rendu dans le cadre d'un contenu délivré sous la forme d'un flux vidéo par exemple. Les moyens intégrés de dispositifs nomades offrant de telles fonctions, assurent ainsi un déchiffrement, lors du stockage d'un contenu délivré chiffré, ou un déchiffrement « à la volée » d'un contenu délivré sous la forme d'un flux vidéo chiffré par exemple. La mise en oeuvre de tels traitements s'appuie généralement sur la manipulation de secrets qui peuvent prendre la forme de clés cryptographiques. Ces clés sont préférentiellement obtenues auprès d'un tiers, par exemple un fournisseur de contenus, dans le cadre d'un engagement contractuel établi entre un client et ledit fournisseur. Cet engagement contractuel peut par exemple découler d'un achat ou d'une souscription d'abonnement effectués par un client auprès d'un fournisseur de contenus.

La gestion, le chargement, la révocation desdits secrets sont complexes. Ils nécessitent en outre que les moyens intégrés soient résistants aux principales attaques connues, dans le but d'interdire à des personnes non autorisées, voire malveillantes, d'obtenir des informations relatives aux secrets et d'en faire un usage ou un commerce frauduleux.

Pour répondre à cette condition une première solution consiste à doter un dispositif nomade de moyens intégrés dits TRM pour « *Tamper Resistant Means* » en langue anglaise, signifiant qu'ils sont résistants aux attaques connues. De tels moyens se présentent le plus souvent sous la forme d'une carte à puce insérée dans un dispositif nomade, ou d'un microcontrôleur utilisé dans le monde des cartes à puce, directement intégré dans le dispositif nomade.

On peut trouver ainsi des téléphones mobiles permettant un accès à des contenus multimédia protégés. Les fonctions d'authentification voire de déchiffrement sont assurées par une carte d'identification d'abonné, SIM (*Subscriber Identity Module*) ou USIM (*Universal Subscriber Identity Module*) présente dans ledit téléphone mobile.

A titre d'exemple, les architectures et protocoles EAP-SIM ou EAP-AKA (*Extensible Application Protocol*) permettent aujourd'hui l'accès à des contenus protégés. Sous l'égide d'un accord entre un opérateur de téléphonie mobile et un fournisseur de contenus protégés, la gestion des secrets propres au dit fournisseur peut être classiquement mise en oeuvre au moyen de protocoles sécurisés de type OTA pour *Over The Air,* connus des opérateurs.

On peut trouver en variante des dispositifs nomades qui n'offrent pas la fonction de téléphonie mobile mais qui hébergent des moyens internes résistants, stockant et manipulant les secrets nécessaires. Dans ce cas, la gestion de l'élaboration, de la répartition et de la révocation des secrets incombe aux fournisseurs de contenus. Ces derniers sont souvent contraints à établir des accords avec des fabricants de dispositifs nomades afin que lesdits fabricants puissent initialiser des secrets avant de mettre sur le marché de tels dispositifs nomades. Ainsi, un dispositif nomade doit être par exemple personnalisé par un fabricant pour chaque client ayant souscrit un abonnement auprès d'un fournisseur de contenus. Cette gestion peut devenir rapidement pénalisante, voire contraignante, et nuire au développement du commerce de tels dispositifs nomades ainsi qu'au développement de l'offre de fournisseurs de contenus protégés.

Pour pouvoir plus librement exploiter un contenu protégé nécessitant un déchiffrement lors de son téléchargement, une deuxième solution peut consister tout d'abord à utiliser un premier dispositif tel que précédemment décrit, par exemple un ordinateur personnel couplé à une carte à puce ou encore un téléphone mobile. Ce dernier permet de réaliser les opérations de téléchargement depuis un serveur de contenus protégés et de déchiffrement. Selon cette deuxième solution, le contenu protégé ainsi déchiffré et chargé peut être transféré depuis le premier dispositif vers un second dispositif nomade offrant des capacités de rendus particulièrement adaptées à son utilisateur ou au dit contenu. Toutefois la majorité de ce type de second dispositif ne disposent pas de moyens internes résistants aux attaques connues, moyens pour permettre un accès, un chargement ou un visionnage de contenus protégés. Cette deuxième solution peut éventuellement présenter un certain avantage pour un utilisateur mais elle se révèle à la fois fastidieuse pour ce dernier et surtout peu sûre pour un fournisseur de contenus. En effet, il devient aisé de distribuer le contenu ainsi déchiffré au plus grand nombre par un client indélicat.

Une troisième solution consiste à télécharger les secrets nécessaires à l'accès, au visionnage d'un contenu protégé depuis un fournisseur de contenus vers un dispositif nomade, tel qu'un ordinateur personnel, ne disposant pas de fonction de téléphonie mobile ni de moyens internes résistants pour exploiter lesdits secrets. Le niveau de sécurité induit par cette troisième solution est très faible et le risque est grand pour un fournisseur de contenus de constater que des secrets ont été divulgués ou transmis par un client indélicat ou même piratés par un tiers malveillant.

L'invention vise à résoudre les inconvénients cités de manière à offrir une solution robuste, efficace et économique permettant de configurer, y compris après sa mise sur le marché, un dispositif nomade ne disposant pas obligatoirement d'une fonction de téléphonie mobile, pour que ce dispositif puisse offrir un accès, un chargement ou un visionnage de contenus multimédia protégés tout en préservant la confidentialité des secrets nécessaires aux dits accès, chargement et/ou visionnage. L'invention permet notamment à un fabricant de produire de tels dispositifs nomades à l'identique et supprime la nécessitée d'établir un accord commercial auprès d'un ou plusieurs fournisseurs de contenus pour personnaliser chaque dispositif.

A cette fin, il est prévu un dispositif nomade apte à restituer à un utilisateur un contenu multimédia selon la revendication 1.

L'invention prévoit en outre un procédé pour configurer un tel dispositif nomade comportant une étape de chargement dans une mémoire dudit dispositif d'un client pour relayer des requêtes d'authentification entre une carte de mémoire de masse comportant des moyens internes résistants aux attaques connues pour réaliser des calculs cryptographiques et un serveur d'authentification accessible via un point d'accès.

Selon un premier mode de réalisation, l'étape de chargement peut être réalisée automatiquement à l'insertion de la carte par le dispositif nomade, le client étant déchargé depuis une mémoire de masse de la carte.

En variante, l'étape de chargement peut être réalisée par l'utilisateur du dispositif après l'insertion de la carte dans ledit dispositif nomade, au moyen d'une interface homme-machine offerte par le dispositif. Le client peut ainsi être déchargé depuis une mémoire de masse de la carte.

L'invention prévoit que le procédé puisse comporter en outre une étape préalable de chargement dans la mémoire du dispositif de moyens pour communiquer avec lesdits moyens internes résistants aux attaques connues de la dite carte si lesdits moyens pour communiquer sont absents dans le dispositif nomade.

Selon cette variante de réalisation de l'invention, l'étape de chargement préalable peut être réalisée automatiquement par le dispositif nomade à l'insertion de la carte ou par un utilisateur du dispositif nomade au moyen d'une interface homme-machine du dispositif, les moyens pour communiquer étant déchargés depuis une mémoire de masse de la carte.

L'invention prévoit également l'utilisation d'une carte de mémoire de masse comportant des moyens internes résistants aux attaques connues pour réaliser des calculs cryptographiques, des moyens de stockage, des moyens pour contrôler l'accès aux dits moyens de stockage et aux moyens internes résistants. Lesdits moyens de stockage comportent un client prévu pour être déchargé depuis les moyens de stockage dans une mémoire d'un dispositif nomade pour relayer des requêtes d'authentification entre la carte et un serveur d'authentification accessible via un point d'accès. Les moyens internes résistants stockent et/ou génèrent des secrets et/ou mettent en oeuvre des calculs cryptographiques nécessaires à la complétude des requêtes d'authentification relayées au moyen dudit client après installation de celui-ci au sein du dispositif nomade.

Préférentiellement l'invention prévoit que la carte de mémoire de masse soit conforme aux dispositions de la norme « *Mobile Commerce Extension »* établie par l'organisme « *SD Card Association* ».

D'autres caractéristiques et avantages apparaîtront plus clairement à la lecture de la description qui suit et à l'examen des figures qui l'accompagnent parmi lesquelles :
- la figure 1 présente une architecture permettant l'accès à un contenu protégé depuis un dispositif nomade de type tablette internet multimédia incluant des moyens internes résistants;
- la figure 2 décrit un objet électronique conforme aux dispositions de la norme « Mobile Commerce Extension » ;
- la figure 3 présente un mode de réalisation conforme à l'invention.

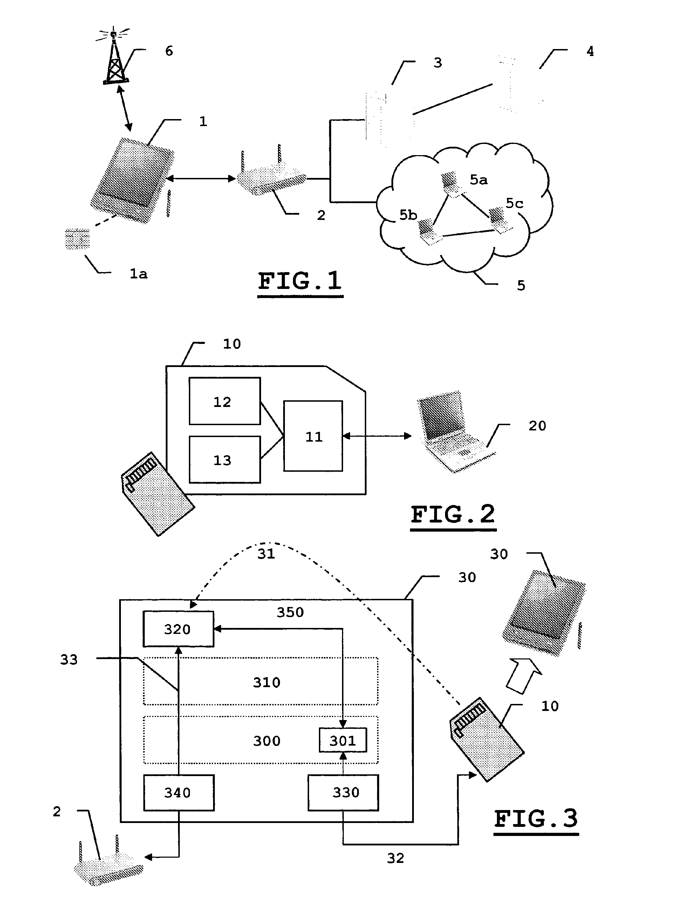

En liaison avec la figure 1, un dispositif nomade 1, du type tablette internet multimédia, est apte à établir une communication avec un serveur 6 de contenus multimédia distant. Le dispositif 1 permet le visionnage d'un contenu délivré sous la forme par exemple d'un flux vidéo. Le dispositif 1 intègre des moyens internes la résistants aux attaques connues, symbolisés sur la figure 1 sous la forme d'une carte à puce de type SIM (*Subscriber Identity Module*) ou USIM (*Universal, Subscriber Identity Module*) que l'on retrouve couramment dans un téléphone mobile. Les moyens la pourraient tout aussi bien se présenter sous la forme d'un composant électronique non extractible et directement connecté aux composants électroniques du dispositif 1. Les moyens la réalisent des calculs de chiffrement et/ou de déchiffrement à l'aide de secrets dérivés ou partagés entre un fournisseur de contenus et le dispositif 1. Préalablement à tout échange de secret, il est connu de mettre en oeuvre un protocole d'authentification forte par exemple du type EAP-SIM ou EPA-AKA ou encore EAP-TLS. L'acronyme EAP provient de l'expression anglaise *Extensible Application Protocol.* Ce type de protocole permet d'établir une communication sécurisée utilisant un réseau sans fil tel que défini par exemple par le standard IEEE (Institute *of Electrical and Electronics Engineers*) 802.11 ou plus connu sous le vocable Wi-Fi.

Ce type de communication requiert une authentification des utilisateurs et un filtrage des trames qu'ils échangent. Le trafic échangé entre un visiteur dit « Supplicant » et le réseau de communication auquel il désire accéder, est ainsi supervisé. En liaison avec la figure 1, le « Supplicant » est le dispositif nomade 1, comportant une interface réseau sans fil. Un point d'accès 2 dit « Authenticator », filtre les trames et héberge un client dit « Proxy » entre le dispositif 1 et un serveur d'authentification 3. Ce dernier, couramment appelé « RADIUS » dans une architecture EAP, assure un rôle d'interface avec une base de données d'abonnés 4 pour gérer des comptes des utilisateurs et plus précisément des droits conférés à ces derniers. Dans le cadre d'un protocole EAP-SIM ou EAP-AKA, la base de donnée 4 est une base de donnée centrale appelée HLR (*Host Location Register*) qui stocke pour chaque utilisateur identifié par un numéro d'abonné IMSI (*International Mobile Subscriber Identity*), ses droits définis par l'abonnement souscrit et une clé Ki. La base HLR se comporte comme un serveur d'authentification produisant des triplets (RAND, SRES, Kc). RAND est un nombre aléatoire, SRES est un cryptogramme et Kc est une clé de chiffrement. SRES et Kc sont obtenus au moyen d'un algorithme à clé secrète utilisant la clé Ki de l'abonné et RAND. SRES sert à authentifier l'abonné. Kc sert à chiffrer les données et la voix entre un téléphone mobile et le réseau. Un abonné est authentifié par une entité du réseau visité, dite MSC (*Mobile Switching Center*), qui stocke dans une base de donnée locale dite VLR (Visiting Location Register) des triplets (RAND, SRES, Kc) délivrés à sa demande par la base HLR.

Le point d'accès 2 permet en outre au dispositif nomade 1 d'accéder au réseau internet 5 ou plus précisément à d'autres dispositifs communicants 5a, 5b, 5c distants.

La figure 2 présente une nouvelle génération de cartes de mémoire de masse appelée couramment « McEx-enabled SD Card ». Ce type de carte est en quelque sorte une extension d'une carte SD (Secure Digital) traditionnelle. Cette dernière est une carte mémoire amovible de stockage de données numériques pouvant être insérée dans la quasi-totalité des dispositifs électroniques tels qu'un appareil photos, un ordinateur personnel ou portable voire dans un baladeur ou téléphone mobile en utilisant un facteur de forme réduit compatible avec le standard dit Micro-SD. Une carte « McX-enabled SD card » est conforme aux dispositions de la norme « Mobile Commerce Extension » établie par l'organisme « SD Card Association ». Une telle carte 10 comporte des moyens contrôleurs d'accès 11 et une mémoire de stockage 12, comme toute carte SD ou micro-SD. Elle comporte en outre des moyens 13 résistants aux attaques connues similaires à ceux utilisés dans le monde des cartes à puce. Les moyens 13 hébergent des données propres à un abonné et des secrets. Ils réalisent en outre des calculs cryptographiques. Pour solliciter les moyens 13, un protocole de communication comparable à celui mis en oeuvre par une carte à puce, est utilisé au travers des moyens contrôleurs 11. Ainsi des commandes généralement de type APDU (*Application Protocol Data Unit*) sont transmises depuis le monde extérieur. A titre d'exemple et selon la figure 2 de telles commandes sont transmises par un ordinateur 20 à une carte 10 insérée dans ledit ordinateur 20. Une telle carte 10 est utilisée principalement dans le cadre d'applications de télévision mobile. Ainsi il est possible d'insérer une carte 10 dans un dispositif nomade 20 tel qu'une tablette internet multimédia, un baladeur vidéo ou un ordinateur portable. La carte 10 génère alors une ou plusieurs clés de décryptage transmise(s) au dispositif nomade 20 pour lui permettre de déchiffrer un flux vidéo par exemple. La carte 10 est également utilisée pour stocker des contenus multimédia, photos, musiques, documents... Pour exploiter les moyens 13 d'une carte 10, un dispositif nomade 20 doit disposer de moyens logiciels dit « drivers ou pilotes » spécifiques généralement présents dans le système d'exploitation dudit dispositif. Dans le cas contraire, seule la mémoire de masse 12 peut être exploitée par le dispositif 20 au travers des moyens contrôleurs 11.

La grande majorité des dispositifs nomades présents actuellement sur le marché ne disposent pas d'une fonction de téléphonie mobile, ni de moyens internes résistants aux attaques connues, pour mettre en oeuvre des calculs cryptographiques tels que la génération de secrets, le chiffrement / déchiffrement de données etc. Ils disposent généralement en revanche de moyens de couplage avec d'autres dispositifs électroniques. Ainsi, un tel dispositif nomade peut présenter des moyens de connexion pour recevoir une carte mémoire sous la forme d'une carte SD ou micro-SD.

La figure 3 permet d'illustrer un schéma fonctionnel d'un dispositif nomade 30 tel qu'une tablette internet multimédia conforme à l'invention. Celui-ci comporte des moyens 330 pour transmettre des requêtes de lecture et/ou écriture à des moyens de contrôle 11 d'une carte de mémoire de masse telle que décrite en liaison avec la figure 2. Selon les modèles de dispositifs nomades, certains peuvent comporter en outre des moyens logiciels 301 pour transmettre aux travers des moyens 330 des requêtes de lecture et/ou d'écriture et/ou d'exécution de commandes à des cartes telles que décrites en figure 2, ces dernières disposant de moyens internes résistants tel qu'utilisés dans le monde des cartes à puce. Ainsi des requêtes transmises à la carte par les moyens 301 et 330 sont élaborées selon un format conforme aux commandes dites APDU (Application Protocol Data Unit) propres aux cartes à puce. Le dispositif nomade tel que décrit en figure 3 peut en outre communiquer avec le monde extérieur, notamment Internet, selon un protocole de communication sans fil, tel que le Wi-Fi ou à l'aide d'une connexion physique à un réseau câblé. Des moyens 340 matériels et/ou logiciels sont intégrés au dit dispositif 30 pour mettre en oeuvre cette communication.

En outre, un dispositif nomade 30 tel que décrit en liaison avec la figure 3 comporte également un système d'exploitation 300 voire des bibliothèques de fonctions 310 pour mettre en oeuvre les moyens 301, 330, 340 et d'autres et ainsi restituer à un utilisateur un contenu multimédia au moyen d'une interface graphique non représentée.

Selon une variante de dispositif nomade, le système d'exploitation 300 peut être dit « ouvert » et être enrichi par l'ajout de fonctions nouvelles. Ainsi il peut être envisagé que les moyens 301 nécessaires à la gestion d'une carte conforme à la figure 2, puissent être chargés manuellement ou automatiquement dans le dispositif nomade après sa mise sur le marché. La présence d'un système d'exploitation 300 comportant de tels moyens 301 est nécessaire à la mise en oeuvre de l'invention.

Cette dernière propose en effet de configurer un dispositif nomade ne disposant pas de moyens internes résistants, sans pour autant nécessiter une adaptation physique et matérielle du dispositif pour le doter d'un module de sécurité ou composant tel qu'utilisé dans les cartes à puce. En effet, les dispositifs nomades ainsi adaptés existent et soulèvent des inconvénients majeurs car chaque dispositif doit être personnalisé à l'aide notamment d'un identificateur d'abonné, de secrets propres et dédiés à tel ou tel fournisseur de contenu etc. L'invention prévoit au contraire d'utiliser une carte 10 prévue pour être facilement et couramment accédée depuis un dispositif nomade, ladite carte comprenant des moyens internes résistant 13 tels que décrits en liaison avec la figure 2. Lors de la souscription d'un abonnement auprès d'un fournisseur de contenus, une carte 10 est personnalisée et remise à un utilisateur selon un mode de personnalisation connu et maîtrisé que l'on rencontre fréquemment dans le monde des cartes à puces telles que les cartes de téléphonie mobile SIM ou USIM par exemple. Une carte 10 est en quelque sorte un facteur de forme à double usage : le premier pour lire et écrire des éléments multimédia dans ou depuis une mémoire de masse 12, le second pour échanger avec un équivalent fonctionnel à une carte à puce grâce aux moyens 13.

L'invention prévoit de réaliser un client 320 destiné à être chargé lors de la configuration d'un dispositif nomade 30. Selon un mode de réalisation préféré, ledit client 320 est déployé par un fournisseur de contenus dans la mémoire de masse 12 d'une carte McEX-enabled SD card. Le client 320 est ainsi préalablement chargé dans la mémoire 12 d'une carte 10. Lors de l'insertion d'une carte 10 conforme à l'invention dans un dispositif nomade 30, ce dernier décharge automatiquement ledit client depuis la mémoire 12 vers une mémoire du dispositif afin que le client puisse être reconnu et exploité par le système d'exploitation 300. Cette opération est nécessaire lors de la configuration et peut être ignorée lors des insertions ultérieures de la carte 10. Le chargement peut-être commandé automatiquement par le système d'exploitation 300 du dispositif ou en variante, un utilisateur dudit dispositif peut commander ledit chargement manuellement au moyen d'une interface homme-machine adaptée. Le client 320 chargé remplit le rôle de « supplicant » tel que présenté en liaison avec la figure 1 selon un protocole d'authentification EAP. Le client 320 a pour rôle de relayer 350 les requêtes d'authentification 33 en provenance ou à destination d'un serveur d'authentification tel que le serveur 3 couplé à la base 4 décrits en figure 1. Ces requêtes sont réceptionnées ou acheminées par les moyens 340 depuis d'un point d'accès 2 remplissant le rôle de « l'authenticator » tels que décrit en figure 1. Lors de la réception d'une requête émanant d'un serveur d'authentificateur, les moyens 340 transmettent la requête au client 320 qui traduit ladite requête en commandes compréhensibles par les moyens 13 de la carte 10. Ces commandes sont transmises à ladite carte par les moyens 301 et 330 du dispositif 30. Le client 320 est en quelque sorte l'équivalent d'un « proxy » d'un serveur sécurisé, ce dernier se présentant sous la forme des moyens 13 d'une carte conforme à l'invention. Lesdits moyens 13 réalisent les traitements nécessaires à la complétude de la requête d'authentification et le résultat est acheminé depuis les moyens 13 au travers des moyens 11, 330, 301, 320 et 340 au point d'accès 2 qui acheminent lesdits résultats au serveur d'authentification 3 et 4. L'invention prévoit notamment que les moyens 13 puissent calculer une clé temporaire et valide durant une session de connexion. Ladite clé est alors acheminée aux moyens 340 aptes à réaliser le cas échéant un déchiffrement performant d'un contenu multimédia délivré au moyen d'un flux vidéo par exemple.

Selon une variante, l'invention prévoit que les moyens de stockages 12 d'une carte 10 puissent contenir en outre un composant logiciel 301 correspondant au pilote de commandes nécessaires à un dispositif nomade pour qu'il puisse communiquer avec une carte telle que la carte 10. Ainsi si ce dernier ne dispose pas des moyens 301, il est possible préalablement à l'installation du client 320, de prévoir une étape manuelle ou automatique de chargement depuis la mémoire 12 vers une mémoire du dispositif pour enrichir le système d'exploitation d'un dispositif nomade non prévu pour gérer des cartes SD McEX-enabled telles que décrites en figure 2.

L'invention permet ainsi notamment de configurer tout dispositif nomade ne disposant pas de moyens internes résistants pour que ce dernier puisse mettre en oeuvre une authentification forte. Le dispositif nomade ne subit aucune adaptation matérielle. Le protocole de déploiement des secrets et des informations liées à un abonnement se fait au travers d'un protocole de personnalisation connu du monde des cartes à puce, en initialisant des moyens 12 et 13 d'une carte ou de tout dispositif électronique en disposant.

L'ensemble constitué par le dispositif nomade 30 configuré et la carte 10 conformes à l'invention est parfaitement apte à mettre en oeuvre un protocole d'authentification forte tel qu'EAP. L'invention permet ainsi une grande facilité de développement pour le commerce de contenus multimédia protégés. Ces derniers peuvent être restitués en toute sécurité à un utilisateur d'un dispositif nomade tel qu'un baladeur vidéo couplé à une carte conforment à l'invention.

L'invention a été décrite de manière non limitative en liaison avec le domaine des cartes SD « McEX-enabled ». Elle peut concerner tout type de carte offrant des moyens internes résistants aux attaques connues pour réaliser des calculs cryptographiques et stocker des secrets. Tout type de carte présentant lesdits moyens et étant apte à établir une communication physique ou sans contact avec un dispositif nomade peut être utilisé pour mettre en oeuvre l'invention. En outre, l'invention a été décrite préférentiellement en référence à un protocole d'authentification EAP. Tout autre protocole peut être utilisé à partir du moment où il supporte l'utilisation de requête d'authentification forte telle que décrit EAP. L'invention ne serait être restreinte aux seuls exemples de cartes ou de protocoles ayant permis d'illustrer la mise en oeuvre de l'invention.

## Revendications

1. Dispositif nomade (30) apte à restituer à un utilisateur un contenu multimédia préalablement délivré par un serveur de contenus (6) distant, comportant :
- des moyens (330, 301) pour recevoir et gérer une carte de mémoire de masse (10) comportant des moyens internes résistants aux attaques connues (13) pour réaliser des calculs cryptographiques ;
- des moyens (340) pour communiquer avec un point d'accès (2) à un réseau de communication sans fil (5) ;
**caractérisé en ce qu'**il comporte en outre des moyens de restitution du contenu multimédia et un client (320) pour relayer des requêtes d'authentification entre la carte (10) et un serveur d'authentification (3, 4) accessible via le point d'accès (2), les moyens internes résistants stockant et/ou générant des secrets et/ou mettant en oeuvre des calculs cryptographiques nécessaires à la complétude desdites requêtes d'authentification relayées au moyen dudit client, cette complétude permettant la restitution du contenu multimédia.

2. Dispositif nomade selon la revendication 1, **caractérisé en ce que** la complétude des requêtes d'authentification permet d'établir une communication sécurisée utilisant le réseau sans fil avec le serveur de contenus multimédia distant à restituer.

3. Procédé pour configurer un dispositif nomade (30) conforme à l'une des revendications 1 et 2 **caractérisé en ce qu'**il comporte une étape de chargement dans une mémoire dudit dispositif (30) d'un client (320) pour relayer des requêtes d'authentification entre une carte (10) de mémoire de masse comportant des moyens internes résistants aux attaques connues (13) pour réaliser des calculs cryptographiques et un serveur d'authentification (3, 4) accessible via un point d'accès (2).

4. Procédé selon la revendication 3 **caractérisé en ce que** l'étape de chargement est réalisée automatiquement à l'insertion de la carte (10) par le dispositif nomade, le client (320) étant déchargé depuis une mémoire de masse (12) de la carte (10).

5. Procédé selon la revendication 3 **caractérisé en ce que** l'étape de chargement est réalisée par l'utilisateur du dispositif après l'insertion de la carte (10) dans ledit dispositif nomade, au moyen d'une interface homme-machine offerte par le dispositif et en ce le client (320) est ainsi déchargé depuis une mémoire de masse (12) de la carte (10).

6. Procédé selon l'une quelconques des revendications 3 à 5 caractérisé en qu'il comporte en outre une étape préalable de chargement dans la mémoire du dispositif (30) de moyens pour communiquer (301) avec lesdits moyens internes résistants aux attaques connues (13) de la dite carte (10) si lesdits moyens pour communiquer (301) sont absents dans le dispositif nomade.

7. Procédé selon la revendication 6 **caractérisé en ce que** l'étape de chargement préalable est réalisée automatiquement par le dispositif nomade (30) à l'insertion de la carte (10) ou par un utilisateur du dispositif nomade au moyen d'une interface homme-machine du dispositif, les moyens pour communiquer (301) étant déchargés depuis une mémoire de masse (12) de la carte (10).

8. Carte de mémoire de masse (10) comportant des moyens internes résistants aux attaques connues (13) pour réaliser des calculs cryptographiques, des moyens de stockage (12), des moyens pour contrôler (11) l'accès aux dits moyens de stockage (12) et aux moyens internes résistants (13), **caractérisée en ce que** :
- les moyens de stockage (12) comportent un client (320), prévu pour être déchargé depuis les moyens de stockage (12) dans une mémoire d'un dispositif nomade conforme à l'une des revendications 1 et 2, pour relayer des requêtes d'authentification entre la carte (10) et un serveur d'authentification (3, 4) accessible via un point d'accès (2) ;
- les moyens internes résistants (13) stockent et/ou génèrent des secrets et/ou mettent en oeuvre des calculs cryptographiques nécessaires à la complétude des requêtes d'authentification relayées au moyen dudit client après installation de celui-ci au sein du dispositif nomade (30) conforme à l'une des revendications 1 et 2, cette complétude permettant la restitution du contenu multimédia.

9. Carte de mémoire de masse (10) selon la revendication 8 **caractérisée en ce que** la dite carte est conforme aux dispositions de la norme « *Mobile Commerce Extension* » établie par l'organisme « *SD Card Association* ».

## Patentansprüche

1. Mobile Vorrichtung (30), die geeignet ist, einem Benutzer einen zuvor von einem entfernten Content-Server (6) gelieferten Multimedieninhalt wiederzugeben, umfassend:
- Mittel (330, 301) zur Aufnahme und Verwaltung einer Massenspeicherkarte (10), umfassend interne, gegen bekannte Angriffe widerstandsfähige Mittel (13), zur Realisierung der kryptographischen Berechnungen;
- Mittel (340) zur Kommunikation mit einem Zugangspunkt (2) zu einem drahtlosen Kommunikationsnetz (5) ;
**dadurch gekennzeichnet, dass** sie darüber hinaus Wiedergabemittel des Multimedieninhaltes und einen Client (320) zur Ablösung der Authentifizierungsanfragen zwischen der Karte (10) und einem über den Zugangspunkt (2) zugänglichen Authentifizierungsserver (3, 4) umfasst, wobei die internen widerstandsfähigen Mittel Geheimnisse speichern und / oder generieren und / oder kryptographische Berechnungen umsetzen, die für die Vollständigkeit der mittels des genannten Client abgelösten genannten Authentifizierungsanfragen notwendig sind, wobei diese Vollständigkeit die Wiedergabe des Multimedieninhaltes zulässt.

2. Mobile Vorrichtung gemäß Anspruch 1, **dadurch gekennzeichnet, dass** die Vollständigkeit der Authentifizierungsanfragen die Herstellung einer gesicherten Kommunikation zulässt, die das drahtlose Netz mit dem entfernten Server mit wiederzugebenden Multimedieninhalten nutzt.

3. Verfahren zur Konfiguration einer mobilen Vorrichtung (30) gemäß Anspruch 1 und 2, **dadurch gekennzeichnet, dass** sie eine Ladestufe in einem Speicher der genannten Vorrichtung (30) eines Client (320)zur Ablösung der Authentifizierungsanfragen zwischen einer Massenspeicherkarte (10), umfassend interne, gegen bekannte Angriffe (13) widerstandsfähige Mittel zur Realisierung der kryptographischen Berechnungen und einen über einen Zugangspunkt (2) zugänglichen Authentifizierungsserver (3, 4) umfasst.

4. Verfahren gemäß Anspruch 3, **dadurch gekennzeichnet, dass** die Ladestufe automatisch beim Einfügen der Karte (10) durch die mobile Vorrichtung realisiert wird, wobei der Client (320) ausgehend von einem Massenspeicher (12) der Karte (10) entlastet wird.

5. Verfahren gemäß Anspruch 3, **dadurch gekennzeichnet, dass** die Ladestufe durch den Benutzer der Vorrichtung nach dem Einfügen der Karte (10) in die genannte mobile Vorrichtung mittels einer Schnittstelle Mensch / Maschine realisiert wird, die von der Vorrichtung angeboten wird, und dass der Client (320) somit ausgehend von einem Massenspeicher (12) der Karte (10) entlastet wird.

6. Verfahren gemäß Anspruch 3 bis 5, **dadurch gekennzeichnet, dass** es darüber hinaus eine vorherige Ladestufe in dem Speicher der Vorrichtung (30) von Mitteln zur Kommunikation (301) mit den genannten internen, gegen bekannte Angriffe (13) widerstandsfähige Mittel der genannten Karte (10), wenn die genannten Mittel zur Kommunikation (301) in der mobilen Vorrichtung fehlen, umfasst.

7. Verfahren gemäß Anspruch 6, **dadurch gekennzeichnet, dass** die vorherige Ladestufe automatisch durch die mobile Vorrichtung (30) beim Einfügen der Karte (10) oder durch einen Benutzer der mobilen Vorrichtung mittels einer Schnittstelle Mensch / Maschine der Vorrichtung realisiert wird, wobei die Mittel zur Kommunikation (301) ausgehend von einem Massenspeicher (12) der Karte (10) entlastet werden.

8. Massenspeicherkarte (10), umfassend interne, gegen bekannte Angriffe widerstandsfähige Mittel (13) zur Realisierung der kryptographischen Berechnungen, Speichermittel (12), Mittel zur Kontrolle (11) des Zugangs zu den genannten Speichermitteln (12) und den internen, widerstandsfähigen Mitteln (13), **dadurch gekennzeichnet, dass**:
- die Speichermittel (12) einen Client (320) umfassen, der vorgesehen ist, um ausgehend von den Speichermitteln (12) in einem Speicher einer mobilen Vorrichtung gemäß Anspruch 1 und 2 entlastet zu werden, um Authentifizierungsanfragen zwischen der Karte (10) und einem über einen Zugangspunkt (2) zugänglichen Authentifizierungsserver (3, 4) abzulösen;
- die internen, widerstandsfähigen Mittel (13) Geheimnisse speichern und / oder generieren und / oder die kryptographischen Berechnungen umsetzen, die für die Vollständigkeit der Authentifizierungsmittel notwendig sind, die mittels des genannten Client nach der Installation desselben innerhalb der mobilen Vorrichtung (30) gemäß Anspruch 1 und 2 abgelöst werden, wobei diese Vollständigkeit die Wiedergabe des Multimedieninhaltes zulässt.

9. Massenspeicherkarte (10) gemäß Anspruch 8, **dadurch gekennzeichnet, dass** die genannte Karte den Vorschriften der Norm "*Mobile Commerce Extension*" genügt, die von der Organisation "*SD Card Association*" etabliert wurde.

## Claims

1. A mobile device (30) capable of reproducing, for a user, multimedia content previously provided by a remote content server (6) including:
- means (330, 301) for receiving and managing a mass memory card (10) including inner means to perform cryptographic calculations, said inner means being resistant to known attacks (13);
- means (340) for communicating with an access point (2) to a wireless communication network (5);
**characterized in that** it further includes means for reproducing the multimedia content and a client (320) for relaying authentication requests between the card (10) and an authentication server (3, 4) that is accessible via the access point (2), with the resistant inner means storing and/or generating secrets and/or implementing cryptographic calculations required for completing said authentication requests relayed through said client, with such completeness enabling the reproduction of the multimedia content.

2. A mobile device according to claim 1, **characterized in that** the completeness of the authentication requests makes it possible to establish a secure communication using the wireless network with the server of the remote multimedia content to be reproduced.

3. A method for configuring a mobile device (30) according to one of claims 1 and 2, **characterized in that** it includes a step of loading into a memory of said device (30) of a client (320) to relay authentication requests between a mass memory card (10) including inner means to make cryptographic calculations, said inner means being resistant to known attacks (13), and that it further includes an authentication server (3, 4) that is accessible via the access point (2).

4. A method according to claim 3, **characterized in that** the loading step is automatically carried out upon insertion of the card (10) by the mobile device, the client (320) being unloaded from a mass memory (12) of the card (10).

5. A method according to claim 3, **characterized in that** the loading step is carried out by the user of the device after inserting the card (10) into said mobile device, using a man-machine interface provided by the device and **in that** the client (320) is thus unloaded from a mass memory (12) of the card (10).

6. A method according to any one of claims 3 to 5, **characterized in that** it further includes a previous step of loading into the memory of the device (30) means for communicating (301) with said inner means resistant to known attacks (13) of said card (10) if said communication means (301) are not present in the mobile device.

7. A method according to claim 6, **characterized in that** the previous loading step is automatically carried out by the mobile device (30) upon insertion of the card (10) or by a user of the mobile device using a man-machine interface of the device, with the communicating means (301) being unloaded from a mass memory (12) of the card (10).

8. A mass memory card (10) including inner means resistant to known attacks (13) to perform cryptographic calculations, storage means (12), means for controlling (11) the access to said storage means (12) and to the inner means resistant to known attacks (13), **characterized in that**:
- the storage means (12) include a client (320), provided to be unloaded from the storage means (12) into a memory of the mobile device according to one of claims 1 and 2, to relay authentication requests between the card (10) and an authentication server (3, 4) that is accessible via the access point (2);
- the inner means resistant to known attacks (13) store and/or generate secrets and/or implement cryptographic calculations required for completing the authentication requests relayed through said client after the installation thereof within the mobile device (30) according to one of claims 1 and 2, with such completeness enabling the reproduction of the multimedia content.

9. A mass memory card (10) according to claim 8, **characterized in that** said card complies with the provisions of the "*Mobile Commerce Extension*" standard established by the "*SD Card Association*" organization.
